Europäisches Patentamt

European Patent Office

Office européen des brevets

(19)

(11) Veröffentlichungsnummer: **0 284 669 B1**

(12) **EUROPÄISCHE PATENTSCHRIFT**

(45) Veröffentlichungstag der Patentschrift: 27.02.91

(51) Int. Cl.⁵: **B60S 1/48**, F16L 53/00

(21) Anmeldenummer: 87118992.4

(22) Anmeldetag: 21.12.87

(54) **Verbindungsstück für beheizbare Schläuche.**

(30) Priorität: 02.04.87 DE 8704903 U

(43) Veröffentlichungstag der Anmeldung:
05.10.88 Patentblatt 88/40

(45) Bekanntmachung des Hinweises auf die
Patenterteilung:
27.02.91 Patentblatt 91/09

(84) Benannte Vertragsstaaten:
**AT BE DE FR GB IT LU NL SE**

(56) Entgegenhaltungen:
**EP-A- 0 050 329**
**EP-A- 0 240 832**
**DE-A- 3 149 623**
**GB-A- 2 121 681**

(73) Patentinhaber: **REHAU AG + Co**
**Rheniumhaus**
**D-8673 Rehau(DE)**

(72) Erfinder: **Der Erfinder hat auf seine Nennung**
**verzichtet**

Rank Xerox (UK) Business Services

## Beschreibung

Die Neuerung betrifft ein wärmeisoliertes Verbindungs- oder Verteilerstück für beheizbare Schläuche, wobei die Schlauchbeheizung mittels längsverlaufender, in die Schlauchwandung eingebetteter Heizleiter erfolgt, bestehend aus einem in das Schlauchlumen teilweise eingesetzten Verbindungselement aus wärmeleitfähigem Material und einer Isolierung.(Lumen = Innenraum).

Aus der DE-U- 86 22 603 ist ein beheizbarer Schlauch bekannt, bei dem parallel zum Lumen ein Heizleiter in der Schlauchwandung angeordnet ist. Das Lumen ist aus der Schlauchachse einseitig versetzt, so daß auf der anderen Seite eine Querschnittsverdickung eintritt, in welche der Heizleiter eingebettet ist. Der Schlauchwandbereich zwischen dem Lumen und dem Heizleiter ist dabei im Querschnitt dünner als der Schlauchwandbereich zwischen dem Heizleiter und der benachbarten Oberfläche des Schlauches.

Aus der DE-U- 85 20 557 ist ein anderer beheizbarer Flüssigkeitsschlauch bekannt. Zu diesem bekannten Flüssigkeitsschlauch ist eine Muffe beschrieben, mit der eine Verbindung zwischen gleichachsig angeordneten Schlauchenden herbeigeführt werden kann. Diese Muffe ist für eine Kaltanschlußleitung bestimmt und soll eine Verbindung zwischen dem beheizbaren Schlauch und einem unbeheizten Schlauchabschnitt herstellen.

Hier setzt die Neuerung ein, die es sich zur Aufgabe gestellt hat, ein Verbindungs- oder Verteilerstück für beheizbare Schläuche zu schaffen, welches die Vorteile der Schlauchbeheizung auf das Verbindungs- oder Verteilerstück überträgt. Neuerungsgemäß wird dazu vorgeschlagen, daß die Heizleiter an den freien Enden der Schläuche durch Entfernen der Schlauchwandung freigelegt sind, daß die freigelegten Längen der Heizleiter um die aus dem Lumen der Schläuche herausragenden Teilbereiche des Verbindungselementes gelegt sind, und daß unter Herausführung eines Heizleiter-Anschlußstückes der Bereich der Schlauchenden mit den herausragenden Teilbereichen des Verbindungselementes einschließlich der aufliegenden Heizleiter als unlösbares Blockelement mit einem Isoliermaterial umspritzt ist.

Das Verbindungselement kann beispielsweise ein Röhrchen aus wärmeleitfähigem Material wie Kupfer, Aluminium, Kunststoff sein, welches in seinen äußeren Abmessungen in etwa dem Lumen des beheizbaren Schlauches entsprechen muß, um in dieses Lumen eingesetzt werden zu können. Dieses Verbindungselement kann axial aus dem Lumen des beheizbaren Schlauches herausragen, es kann Y-, T-Form aufweisen oder in anderer geeigneter Weise geformt sein. Um die aus dem Lumen des beheizbaren Schlauches herausragenden Bereiche des Verbindungsstückes wird der Heizleiter gewickelt, dessen Ende nach der Umspritzung in Form eines Flachsteckers aus dem Verbindungsstück herausragt. An diesen Flachstecker wird danach die Anschlußsteckeinheit für die elektrische Beheizung aufgeschoben.

Bei einem axial mit dem Lumen des beheizbaren Schlauches verlaufenden Verbindungselement kann der Heizleiter in Form von schraubenlinienförmigen Windungen auf das aus dem Lumen herausragende Teilstück des Verbindungselementes aufgewickelt werden. Bei einem beispielsweise Y-förmigen Verbindungselement für mehrere beheizbare Schläuche, deren Enden gemäß der Neuerung so behandelt sind, daß durch Entfernen der Schlauchwandung die zu den einzelnen Schläuchen gehörenden Heizleiter freigelegt sind, werden die freigelegten Heizleiter um die Basis des Y-förmigen Verbindungsstückes geschlungen und so aus der Umspritzung herausgeführt, daß ein einheitliches Anschlußelement in Form eines Flachstekkers für die mehreren Heizleiter der mehreren beheizbaren Schläuche zur Verfügung steht. Dieser Aufbau kann auch bei T-förmigen Verbindungsstücken oder anderen Raumformen dieser Verbindungselemente vorteilhaft gewählt werden. Hervorzuheben ist dabei, daß die mehreren beheizbaren Schläuche, die durch das Verbindungselement miteinander verbunden werden, durch Herausführung ihrer Heizleiter als Einheit mit nur einem Anschlußstekker beheizt werden können.

Die Umspritzung der Verbindungselemente nach dem Aufbau gemäß der Neuerung erfolgt mit einem kompakten, korrosions- und vibrationsgeschützten Material. Diese Material muß nichtleitend eingestellt sein, da die Zuleitung von Wärme nur über das Heizleiter-Anschlußstück als Flachstecker erfolgt.

Die besonderen Vorteile der neuerungsgemäßen Ausführung werden darin gesehen, daß die Beheizung der Verbindungs- oder Verteilerstücke über den beheizbaren Schlauch erfolgt, und daß keine weiteren elektrischen Anschlüsse hierfür notwendig sind.

Es hat sich als vorteilhaft erwiesen, daß die Heizleiter um die aus dem Lumen der Schläuche herausragenden Teilbereiche der Verbindungselement gewickelt sind. Durch diese Wicklungen werden die aus dem Lumen der Schläuche herausragenden Teilbereiche der Verbindungselemente voll umfänglich beheizt und die Intensität der Beheizung kann durch die Wicklungsgänge, d.h. durch die Entfernung der Einzeldrähte der Wicklung voneinander festgelegt werden.

Zweckmäßig sind mehrere Heizleiter aus mehreren Schläuchen zur Bildung des Heizleiter-Anschlußstückes zusammengefaßt. Dadurch kann über ein einziges Anschlußelement die Beheizung sowohl des Verbindungsstückes als auch der zugeordneten beheizbaren Schläuche erfolgen. Das Verbindungselement kann geradlinig, T- oder Y-förmig gestaltet sein, wobei andere mögliche Raumformen ebenfalls eingeschlossen sind.

Das Verbindungselement kann an dem vom Schlauchende abgewandten freien Ende in eine Düsenöffnung übergehen. Diese Anordnung bringt den Vorteil, daß die Wicklung des Heizleiters über dem herausragenden Teilbereich des Verbindungselementes bis in den Bereich der Düsenöffnung geführt werden kann. Auf diese Weise kann die Düsenöffnung selbst mit beheizt werden, wodurch ein nachteiliges Einfrieren in diesem Bereich verhindert wird.

In der Zeichnung sind Ausführungsbeispiele des neuerungsgemäßen Verbindungs- oder Verteilerstückes für beheizbare Schläuche schematisch dargestellt; es zeigt:

Fig. 1 ein Y-förmiges Verbindungsstück mit drei umspritzten, beheizbaren Schläuchen

Fig. 2 ein gradlinig verlaufendes Verbindungsstück mit einem umspritzten, beheizbaren Schlauch und einem Düsenelement.

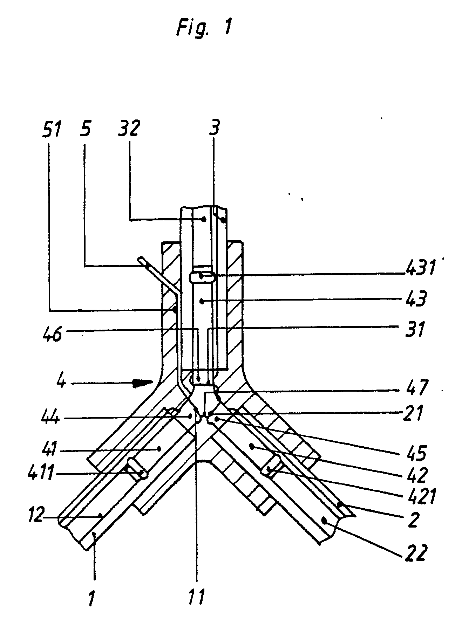

Fig. 1 zeigt drei beheizbare Schläuche 1, 2, 3. Diese Schläuche 1, 2, 3 sind an ihren freien Enden von der Schlauchwandung befreit, so daß die Heizleiter 11, 21, 31 in vorgegebener Länge freigelegt sind.

In das Lumen 12, 22, 32 der Schläuche 1, 2, 3 sind Teilbereiche 41, 42, 43 eines Y-förmigen Verteilerstückes 4 eingesetzt. Die Teilbereiche 41, 42, 43 können in ihren freien Enden Verdickungen 411, 421, 431 zur besseren Halterung im Lumen 12, 22, 32 der Schläuche 1, 2, 3 aufweisen. Die Heizleiter 11, 21, 31 sind um die aus dem Lumen 12, 22, 32 der Schläuche 1, 2, 3 herausragenden Teilbereiche 44, 45, 46, 47 des Verbindungselementes 4 gelegt. Die Heizleiter 11, 21, 31 sind zu einem Heizleiter-Bündel 51 zusammengefaßt und zu dem Heizleiter-Anschlußstück 5 vereinigt. Dieser Aufbau ist anschließend mit einer Umhüllung 6 aus Isoliermaterial derart umspritzt, daß das Heizleiter-Anschlußstück 5 in Form eines Flachsteckers aus der Umhüllung 6 herausragt. Die Umhüllung 6 aus Isoliermaterial bewirkt, daß der ganze geschilderte Aufbau als ein kompaktes, isoliertes Verbindungselement für die drei beschriebenen beheizbaren Schläuche 1, 2, 3 wirkt, wobei ein einziges Heizleiter-Anschlußstück 5 für die Beheizung sowohl der Schläuche 1, 2, 3 als auch des Verbindungselementes 4 dient.

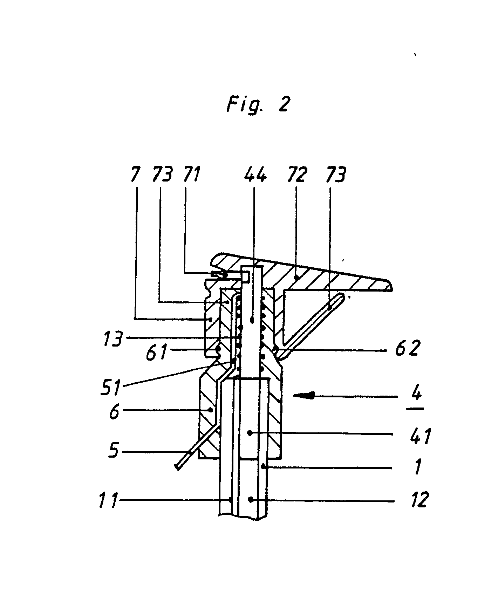

Fig. 2 zeigt im Unterschied zur Darstellung nach Fig. 1 ein geradlinig verlaufendes Verbindungselement 4, welches in das Lumen 12 des Schlauches 1 an dessen freiem Ende mit dem Teilbereich 41 eingesetzt ist. Der aus dem Lumen 12 des Schlauches 1 herausragende Teilbereich 44 des Verbindungselementes 4 ist mit dem Heizleiter 1 umwickelt, wobei enge Wicklungen 13 bis in den Bereich des freien Endes des Teilbereiches 44 gelegt sind. Das Ende dieser Wicklungen verläuft als Anschlußdraht 51 zum Heizleiteranschlußstück 5. Dieser Aufbau ist mit der Umhüllung 6 aus Isoliermaterial Form eines kompakten Blockelementes umspritzt.

Dieses kompakte Blockelement bildet das Unterteil einer beheizten Scheibenwaschdüse für Kraftfahrzeuge. Das Oberteil 7 ist auf dieses Unterteil aufgerastet und trägt die Düsenöffnung 71, welche mit dem Lumen des herausragenden Teilbereichs 44 des Verbindungselementes 4 verbunden ist. Das Oberteil 7 besitzt eine Abdeckfahne 72 und eine Rastzunge 73. Es wird von oben in eine geeignete Öffnung, z.B. einer Aussparung in der Motorhaube eines Kraftfahrzeuges, eingedrückt und verrastet dort über die Rastzunge 73 selbständig. Die Abdeckfahne 72 deckt die Öffnung zusätzlich ab. In die Aufnahmeöffnung 73 des Oberteils 7 wird nunmehr von unten der mit den Wicklungen 13 des Heizleiters 11 versehene Teilbereich des kompakten Blockelementes eingedrückt und dort über die Rastelemente 61, 62 in seinem Sitz festgelegt. Auf diese Weise ist über den beheizbaren Schlauch 1 gleichzeitig eine Beheizung der Düsenöffnung 71 möglich, so daß ein Einfrieren in diesem sensiblen Bereich verhindert werden kann.

## Ansprüche

1. Wärmeisoliertes Verbindungs- oder Verteilerstück für beheizbare Schläuche, wobei die Schlauchbeheizung mittels längs verlaufender, in die Schlauchwandung eingebetteter Heizleiter erfolgt, bestehend aus einem in das Schlauchlumen d.h. der Schlauchinnenraum teilweise eingesetzten Verbindungselement aus wärmeleitfähigem Material und einer Isolierung, dadurch gekennzeichnet, daß die Heizleiter (11, 21, 31) an den freien Enden der Schläuche (1, 2, 3) durch Entfernen der Schlauchwandung freigelegt sind, daß die freigelegten Längen der Heizleiter (11, 21, 31) um die aus dem Lumen (12, 22, 32) der Schläuche (1, 2, 3) herausragenden Teilbereiche (44, 45, 46, 47) des Verbindungselementes (4) gelegt sind, und daß unter Herausführung eines Heizleiter-Anschlußstückes (5) der Bereich der Schlauchenden mit den herausragenden Teilbereichen (44, 45, 46, 47) des Verbindungselementes (4) einschließlich der aufliegenden Heizleiter (11, 21, 31) als unlösbares Blockelement mit einer Umhüllung (6) aus Isoliermaterial umspritzt ist.

2. Verbindungs- und Verteilerstück nach Anspruch 1, dadurch gekennzeichnet, daß die Heizleiter (11, 21, 31) um die aus dem Lumen (12, 22, 32) der Schläuche (1, 2, 3) herausragenden Teilbereiche (44, 45, 46, 47) des Verbindungselementes (4) gewickelt sind.

3. Verbindungs- und Verteilerstück nach Ansprüchen 1 und 2, dadurch gekennzeichnet, daß mehrere Heizleiter (11, 21, 31) aus mehreren Schläuchen (1, 2, 3) zur Bildung des Heizleiter-Anschlußstückes (5) zusammengefaßt sind.

4. Verbindungs- und Verteilerstück nach Anspruch 1, dadurch gekennzeichnet, daß das Verbindungselement (4) geradlinig, T-förmig oder Y-förmig gestaltet ist.

5. Verbindungs- und Verteilerstück nach Anspruch 1, dadurch gekennzeichnet, daß das Verbindungselement (4) an dem vom Ende des Schlauches (1) abgewandten freien Ende in eine Düsenöffnung (71) übergeht.

6. Verbindungs- und Verteilerstück nach Ansprüchen 1 und 5, dadurch gekennzeichnet, daß der Heizleiter (11) aus dem Umfang des Verbindungselementes (4) bis in den Bereich der Düsenöffnung (71) aufgebracht ist.

## Claims

1. Thermally insulated connector or distributor piece for heatable tubes, with the tube being heated by means of heating conductors embedded into and running along the tube wall, consisting of a connecting element of thermally conductive material partly inserted into the tube lumen and of insulation, characterised by the fact that the heating conductors (11, 21, 31) at the free ends of the tubes (1, 2, 3) are exposed by removing the tube wall, that the exposed heating conductors lengths (11, 21, 31) are wound around the areas (44, 45, 46, 47) of the connecting element (4) projecting out of the lumen (12, 22, 32) of the tubes (1, 2, 3) and that after bringing out a heating conductor connection piece (5) the area of the tube ends with the projecting areas (44, 45, 46, 47) of the connecting element (4), including the surface-mounted heating conductor (11, 21, 31) are encapsulated in a coating (6) of insulating material to form an undetachable block element.

2. Connector and distributor piece as described in claim 1, characterised by the fact that the heating conductors (11, 21, 31) are wound around the areas (44, 45, 46, 47) of the connecting element (4) projecting out of the lumen (12, 22, 32) of the tubes (1, 2, 3).

3. Connector and distributor piece as described in claim 1, characterised by the fact that several heating conductors (11, 21, 31) from the several tubes (1, 2, 3) are grouped together to form the heating conductor connection piece (5).

4. Connector and distributor piece as described in claim 1, characterised by the fact that the connecting element (4) is straight, T-shaped or Y-shaped.

5. Connector and distributor piece as described in claim 1, characterised by the fact that the connecting element (4) at the free end turned away from the end of the tube (1) leads into a nozzle opening (71)

6. Connector and distributor piece as described in claims 1 and 5, characterised by the fact that the heating conductor (11) is attached to the circumference of the connecting element (4) and leads into the area of the nozzle opening (71)

## Revendications

1. Pièce de raccord ou d'embranchement calorifugée pour tuyaux flexibles chauffables, le chauffage du tuyau étant réalisé par des conducteurs chauffants insérés longitudinalement dans la paroi du tuyau flexible, se composant d'un élément de fixation en une matière bonne conductrice de chaleur, installé en partie dans le lumen du tuyau (c.-à-d. à l'intérieur du tuyau) et d'une isolation , ceci caractérisé par le fait que les conducteurs chauffants (11, 21, 31) sont dégagés aux extrêmités libres des tuyaux (1, 2, 3) en ôtant la paroi du tuyau, par le fait que les longueurs dégagées des conducteurs chauffants (11, 21, 31) sont posées autour des parties (44, 45, 46, 47) de l'élément de fixation (4) ressortant de l'intérieur (12, 22, 32) des tuyaux flexibles (1, 2, 3) et par le fait qu'en faisant sortir un raccord du conducteur chauffant (5) la zone des extrêmités du tuyau et les parties ressortant (44, 45, 46, 47) de l'élément de fixation (4), y compris le conducteur chauffant posé dessus (11, 21, 31), est encastrée par injection dans une enveloppe (6) en matière isolante sous forme de bloc indissoluble.

2.  Pièce de raccord et d'embranchement selon la revendication 1, caractérisée par le fait que les conducteurs chauffants (11, 21, 31) sont enroulés autour des parties (44, 45, 46, 47) de l'élément de fixation (4) ressortant de l'intérieur (12, 22, 32) des tuyaux (1, 2, 3).

3.  Pièce de raccord et d'embranchement selon les revendications 1 et 2, caractérisée par le fait que plusieurs conducteurs chauffants (11, 21, 31) de plusieurs tuyaux (1, 2, 3) sont regroupés pour former le raccord (5) des conducteurs chauffants.

4.  pièce de raccord et d'embranchement selon la revendication 1, caractérisée par le fait que l'element de fixation (4) est constitué en forme droite, en T ou en Y.

5.  Pièce de raccord et d'embranchement selon la revendication 1, caractérisée par le fait que l'élément de fixation (4) à l'extrêmité libre opposée à l'extrêmité du tuyau (1) se convertit en une ouverture de buse (71).

6.  Pièce de raccord et d'embranchement selon les revendications 1 et 5, caractérisée par le fait que le conducteur chauffant (11) est installé sur la périphérie de l'élément de fixation (4) jusque dans la zone de l'ouverture de buse (71).

Fig. 1

Fig. 2